Europäisches Patentamt

European Patent Office

Office européen des brevets

(19)

(11) Veröffentlichungsnummer: **0 087 593**
**B1**

(12) **EUROPÄISCHE PATENTSCHRIFT**

(45) Veröffentlichungstag der Patentschrift :
21.01.87

(21) Anmeldenummer : 83100830.5

(22) Anmeldetag : 28.01.83

(51) Int. Cl.⁴ : **H 02 M 3/06, H 04 M 19/00**

(54) Schaltungsanordnung für Fernmeldeanlagen, insbesondere für Fernsprechvermittlungsanlagen.

(30) Priorität : 25.02.82 DE 3206767

(43) Veröffentlichungstag der Anmeldung :
07.09.83 Patentblatt 83/36

(45) Bekanntmachung des Hinweises auf die Patenterteilung : 21.01.87 Patentblatt 87/04

(84) Benannte Vertragsstaaten :
**DE FR GB NL SE**

(56) Entgegenhaltungen :
**DE-A- 2 842 262**
**DE-A- 2 917 926**
**DE-B- 2 551 916**
**US-A- 4 257 087**

(73) Patentinhaber : **Siemens Aktiengesellschaft Berlin und München**
**Wittelsbacherplatz 2**
**D-8000 München 2 (DE)**

(72) Erfinder : **Probst, Harald**
**Über der Klause 2**
**D-8000 München 90 (DE)**

EP 0 087 593 B1

## Beschreibung

Die Erfindung betrifft eine Schaltungsanordnung für Fernmeldeanlagen, insbesondere für Fernsprechvermittlungsanlagen, mit Gleichspannungswandlern, welche jeweils eingangsseitig über eine Eingangsinduktivität an einen Pol einer Gleichspannungsquelle und ausgangsseitig über eine Ausgangsinduktivität an die eine von zwei Eingangsklemmen eines Verbrauchers angeschlossen sind und sowohl eingangsseitig als auch ausgangsseitig jeweils einen nicht pulsierenden Gleichstrom führen, und in welchen der dem Eingang des Wandlers abgewandte Anschluß der Eingangsinduktivität und der dem Ausgang abgewandte Anschluß der Ausgangsinduktivität über einen Speicherkondensator miteinander verbunden sind, und in welchen mittels einer Schalteranordnung sowohl der Speicherkondensator zwischen die Eingangsinduktivität und den anderen Pol der Gleichspannungsquelle schaltbar, als auch der dem Ausgang abgewandte Anschluß der Ausgangsinduktivität mit der anderen Eingangsklemme des Verbrauchers verbindbar und kontinuierlich abwechselnd hiermit sowohl der Speicherkondensator zwischen die Ausgangsinduktivität und die andere Eingangsklemme des Verbrauchers schaltbar als auch der dem Eingang des Wandlers abgewandte Anschluß der Eingangsindkutivität mit dem anderen Pol der Gleichspannungsquelle verbindbar ist.

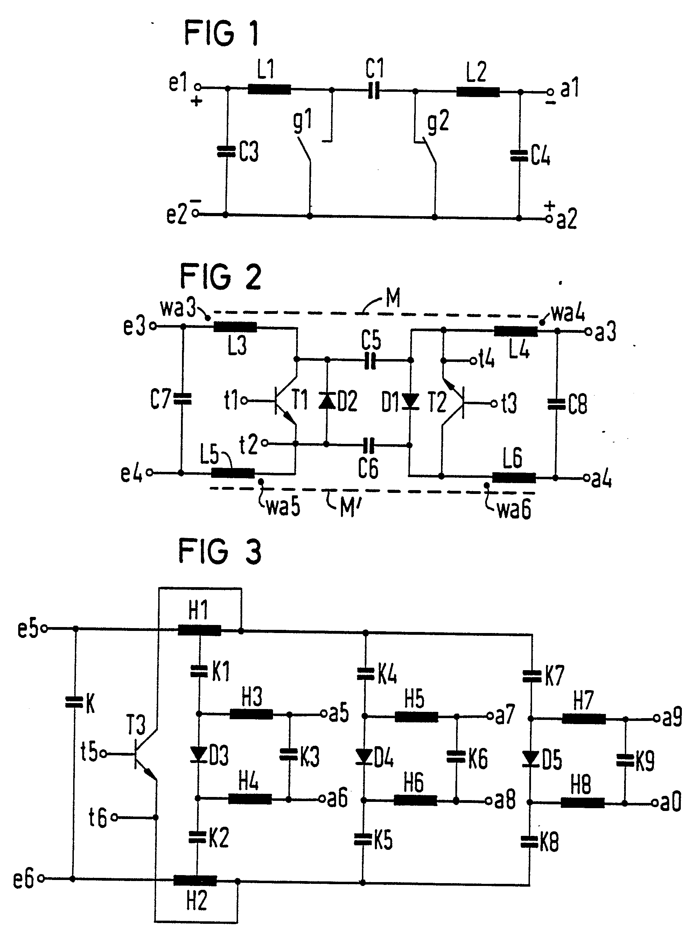

Eine Schaltungsanordnung dieser Art, wie sie in Figur 1 in einfachster und allgemeiner Form wiedergegeben ist, zeigt und beschreibt bereits die deutsche Offenlegungsschrift 2 842 262 in bzw. anhand von deren Figur 5. Ebenfalls zeigt und beschreibt die deutsche Offenlegungsschrift 2 917 926 in bzw. anhand von Figur 6 eine Schaltungsanordnung der zuvor angegebenen Art. Bei dieser ist die erwähnte Schalteranordnung einerseits auf der der Eingangsinduktivität zugewandten Seite des Speicherkondensators und andererseits auf der der Ausgangsinduktivität zugewandten Seite des Speicherkondensators jeweils mit Hilfe eines Transistors und mit Hilfe einer zu dessen Emitter-Kollektor-Strecke antiparallel zusammengeschalteten Diode verwirklicht. Dabei sehen diese beiden bekannten Anordnungen vor, daß eine Klemme eines Verbrauchers mit dem einen Pol der Gleichspannungsquelle über den Gleichspannungsumwandler verbunden ist, wohingegen die andere Klemme des Verbrauchers mit dem anderen Pol der Gleichspannungsquelle unmittelbar verbunden ist. Zum Zweck einer gleichspannungsmäßigen Potentialtrennung sieht die erstgenannte der beiden Offenlegungsschriften in Fig. 10 ff. einen Transformator vor, der also zusätzlich zu den eingangs erwähnten Induktivitäten erforderlich ist.

Für die Erfindung besteht deshalb die Aufgabe, bei einem Gleichspannungswandler der eingangs angegebenen Art außer der Forderung nach einem kontinuierlichen Eingangsstrom und einem kontinuierlichen Ausgangsstrom die Forderung einer galvanischen Trennung des Verbraucherstromkreises von der Gleichspannungsquelle zwecks Aufwandsersparnis auf andere Weise zu bewerkstelligen.

Die Erfindung löst die gestellte Aufgabe dadurch, daß die schaltbare Verbindung des Speicherkondensators mit dem anderen Pol der Gleichspannungsquelle über einen zweiten Speicherkondensator verläuft, und daß über denselben auch die schaltbare Verbindung des — ersten — Speicherkondensators mit der zweiten Eingangsklemme des Verbrauchers verläuft, daß die Verbindung mit dem anderen Pol der Gleichspannungsquelle über eine zweite Eingangsinduktivität und die Verbindung mit der zweiten Eingangsklemme des Verbrauchers über eine zweite Ausgangsinduktivität verlaufen, daß beide Eingangsinduktivitäten und beide Ausgangsinduktivitäten miteinander induktiv gekoppelt sind und als ein einziges elektromagnetisches Bauteil ausgeführt sind, wobei der Wicklungsanfang — oder das Wicklungsende — der ersten Eingangsinduktivität mit dem einen Pol der Gleichspannungsquelle und der ersten Ausgangsinduktivität mit der ersten Eingangsklemme des Verbrauchers und das Wicklungsende — oder der Wicklungsanfang — der zweiten Eingangsinduktivität mit dem anderen Pol der Gleichspannungsquelle und der zweiten Ausgangsinduktivität mit der zweiten Eingangsklemme des Verbrauchers verbunden ist.

Mit Hilfe der Erfindung ist es also möglich, daß Potential der Ausgangsklemmen des Gleichspannungswandlers beliebig festzulegen. Es ist also auch möglich, eine beliebige der beiden Ausgangsklemmen zum Beispiel auf Masse- oder Erdpotential zu legen und demgemäß über die andere der beiden Ausgangsklemmen wahlweise Minuspotential bzw. Pluspotential dem Verbraucher zuzuführen.

In der Zeichnung zeigt Fig. 1 eine Schaltungsanordnung der bereits bekannten Art. Fig. 2 und Fig. 3 zeigen Ausführungsbeispiele der Erfindung nur in wesentlich zu ihrem Verständnis beitragenden Bestandteilen. Die in Fig. 2 dargestellte Schaltungsanordnung macht das Grundprinzip der Erfindung in einfachster Realisierung anhand einer Schaltungskonfiguration deutlich, für die eine Fülle weiterer Ausgestaltungsmöglichkeiten besteht, die sich aus der Anordnung nach Fig. 3 entnehmen lassen.

Zunächst sei die Schaltungsanordnung nach Fig. 2 beschrieben. Diese Schaltungsanordnung weist zwei Eingangsklemmen e3 und e4 und zwei Ausgangsklemmen a3 und a4 auf. Die Eingangsklemmen sind mit den beiden Anschlußklemmen einer Gleichspannungsquelle verbunden. Dem einen Pol dieser Gleichspannungsquelle entspricht also die eine ihrer Anschlußklemmen und dem anderen ihrer beiden Pole ihre andere Anschlußklemme. Mit den beiden Ausgangsklemmen a3 und a4 ist ein Verbraucher mit seinen beiden Eingangsklemmen verbunden. Bei diesem Verbraucher kann es sich um Fernmeldegeräte verschiedener Art handeln, zum Beispiel Steuereinrichtungen, Koppelfeldeinstelleinrichtungen, Teilnehmeranschlußschaltungen, Konzentratoren, Teilnehmerstationen und so weiter, sowie um Teile solcher Geräte.

Der in Fig. 2 gezeigte Gleichspannungswandler weist unter anderem Eingangsinduktivitäten L3 und L5 und Ausgangsinduktivitäten L4 und L6 auf. Ferner weist der Gleichspannungswandler zwei Speicherkondensatoren C5 und C6 auf. Darüber hinaus ist eine Schalteranordnung vorgesehen, die im Falle einer einfachsten Realisierung der Erfindung in Form von mechanischen Kontakten, ähnlich wie in Fig. 1 dargestellt (g1 und g2), ausgebildet sein kann. Bei diesen Kontakten kann es sich zum Beispiel um die Kontakte eines Relais handeln, das pulsierend betätigt wird, ebenso aber auch um die Kontakte eines kontinuierlich schwingenden Kontaktsystems. Diese Schalteranordnung kann bei der Anordnung gemäß Fig. 2 jedoch auch in der hier tatsächlich gegebenen Darstellung mit Hilfe von Transistoren T1 und T2 realisiert sein, wobei auch die Dioden D2 und D1 bei der Realisierung der Schalterfunktion mitwirken, was jedoch weiter unten im Detail beschrieben ist.

Die Eingangsinduktivitäten L3 und L5, sowie die Ausgangsinduktivitäten L4 und L6 sind elektromagnetisch gekoppelt. Sie sind hierfür in zweckmäßiger Weise zu einem einzigen elektromagnetischen Bauteil, einer Drossel, vereinigt. Eine solche Kopplung ist in Fig. 2 mit « M » bezeichnet. Bezüglich dieser elektromagentischen Kopplung der Eingangsinduktivitäten mit den Ausgangsinduktivitäten ist der Wicklungssinn einer jeden von ihnen von Bedeutung. In Fig. 2 ist der Wicklungsanfang der Eingangsinduktivität L3 mit « wa3 » und der Wicklungsanfang der Ausgangsinduktivität L4 mit « wa4 » bezeichnet. Hierbei ist davon auszugehen, daß beide Wicklungen in der gleichen Drehrichtung bezüglich der Wicklungsherstellung gefertigt sind. Im übrigen sei davon ausgegangen, daß die Eingangsinduktivitäten die gleichen elektrischen Werte aufweisen, wie die Ausgangsinduktivitäten. Ferner haben die Kondensatoren C5 und C6 gleiche Kapazitätswerte ; gleiche Kapazitätswerte können ferner auch die Kondensatoren C7 und C8 aufweisen.

Im Blick auf die nun anschließend beschriebene Arbeitsweise sei zunächst davon ausgegangen, daß in der Schaltungsanordnung nach Fig. 2 die Transistoren T1 und T2, sowie die antiparallel mit ihnen zusammengeschalteten Dioden D2 und D1 durch Kontakte ersetzt seien, wie sie in Fig. 1 dargestellt sind. Demnach ist weiterhin davon auszugehen, daß zunächst bei geschlossenem rechtsseitigem Kontakt (entsprechend dem Kontakt g2 in Fig. 1) auf der Verbraucherseite die Speicherkondensatoren C5 und C6 über die Eingangsinduktivitäten L3 und L5 über den dem Transistor T2 entsprechenden Kontakt aufgeladen seien, denn diese Kondensatoren sind über die Anschlußklemmen e3 und e4 mit der Gleichspannungsquelle verbunden. Die beiden Kontakte (entsprechend den Kontakten g1 und g2 in Fig. 1) werden bei der Anordnung in Fig. 2 immer gleichzeitig betätigt. Werden sie von ihrer Ausgangslage (entsprechend der Ausgangslage, wie sie vergleichsweise in Fig. 1 dargestellt ist) jeweils in ihre gegenteilige Lage umgeschaltet, so schließt dabei der eine Kontakt (entsprechend g1), wohingegen der andere Kontakt (entsprechend g2) öffnet.

Geht man nun davon aus, daß der mit der Eingangsklemme e3 verbundene Pol der Gleichspannungsquelle der Pluspol und der mit der Eingangsklemme e4 verbundene Pol der Gleichspannungsquelle deren Minuspol ist, so werden die Speicherkondensatoren C5 und C6 während der Dauer der Schliessung des rechtsseitigen Kontaktes (also des dem Kontakt g2 in Fig. 1 entsprechenden Kontaktes in Fig. 2, dem hier der Transistor T2 und die Diode D1 entsprechen) und der Öffnung des linksseitigen Kontaktes (entsprechend g1), so aufgeladen, daß nach Betätigung beider Kontakte an der Ausgangsklemme a4 ein positiveres Potential gegenüber dem an der Ausgangsklemme a3 herrschenden Potential erscheint. Es fließt deshalb ein Strom über die Ausgangsinduktivitäten L4 und L6, die Speicherkondensatoren C5 und C6 und über den Verbraucher (Ausgangsklemmen a3/a4). Während der Dauer der Schließung des dem Kontakt g1 in Fig. 1 entsprechenden Kontaktes in Fig. 2 (ihm entsprechen der Transistor T1 bzw. die Diode D2 in Fig. 2) fließt außerdem ein Strom von der Gleichspannungsquelle über die Eingangsklemme e3, die Eingangsinduktivität L3, über den genannten Kontakt, die Eingangsinduktivität L5 und über die Eingangsklemme e4 zurück zur Gleichspannungsquelle. In diesem Schaltzustand werden die Speicherkondensatoren C5 und C6 teilweise entladen.

Der zuvor angesprochene Entladungsvorgang dauert nur einen relativ geringen Bruchteil des Zeitraumes, der duch die Zeitkonstante des Entladungsstromkreises bestimmt ist. Der Entladungsvorgang für die Speicherkondensatoren C5 und C6 wird zunächst wieder dadurch beendet, daß die Kontakte in ihre ursprünglich angenommene Lage (in die der Darstellung in Fig. 1 entsprechende Lage) zurückkehren. Nunmehr werden die beiden Speicherkondensatoren C5 und C6 wieder über die Eingangsinduktivitäten und den Kontakt aufgeladen, der dem Kontakt g2 in Fig. 1 entspricht (anstelle von Transistor T2 und Diode D1 in Fig. 2). Da die Ausgangsinduktivitäten L4 und L6 im vorhergehenden Schaltzustand (der also ungleich dem der Darstellung in Fig. 1 entsprechenden Schaltzustand ist) in dem beschriebenen Entladungsstromkreis für die Speicherkondensatoren C5 und C6 von Strom durchflossen waren, dienen sie nach Schließung des dem Kontakt g2 in Fig. 1 entsprechenden Kontaktes in Fig. 2 aufgrund ihrer induktiven Wirkung als unterstützende zusätzliche Spannungsquelle für den über den Verbraucher verlaufenden Stromkreis. Die Eingangsinduktivitäten L3 und L5 dienen dazu, daß jeweils nach dem Öffnen des dem Kontakt g1 in Fig. 1 entsprechenden Kontaktes in Fig. 2 und dem Schließen des anderen Kontaktes (entsprechend g2) der Strom über die Eingangsinduktivitäten L3 und L5 in nahezu voller Höhe weiterfließt, daß also über die Gleichspannungsquelle ein nahezu gleich großer Strom einerseits während der Dauer der Schließung des dem Kontakt g1 in Fig. 1 entsprechenden Kontaktes in Fig. 2 und der Öffnung des anderen Kontaktes (entsprechend g2) und andererseits während der umgekehrten anderen Kontaktstellung fließt. In entsprechender Weise dienen die Ausgangsinduktivitäten L4 und L6 dazu, daß über den Verbraucher ein nahezu gleich großer Strom fließt, also einerseits während der Dauer der Schließung des dem Kontakt g1 in Fig. 1 entsprechenden Kontaktes in Fig. 2 und der Dauer der Öffnung des anderen Kontaktes (entsprechend g2) und andererseits während der Dauer der Öffnung des ersteren Kontaktes (entsprechend g1) und der Dauer der Schließung des anderen Kontaktes (entsprechend g2).

Wie bereits erwähnt, führt bei Anschluß eines Verbrauchers an die Ausgangsanschlüsse a3 und a4 des Gleichspannungswandlers nach Fig. 2 dieser ebenso einen kontinuierlichen Eingangsstrom, der über die Gleichspannungsquelle und die Eingangsanschlüsse e3 und e4 fließt, wie auch einen kontinuierlichen Ausgangsstrom, der über die Ausgangsanschlüsse a3 und a4 und über den Verbraucher fließt. Die Kontinuität des Eingangsstroms und des Ausgangsstroms schließt eine geringfügige Welligkeit nicht aus. Bekanntlich ist diese Welligkeit desto kleiner, je höher die Frequenz ist, mit der die betreffenden Kontakte (entsprechend den Kontakten g1 und g2) betätigt werden. Ferner wird diese Welligkeit sowohl eingangsseitig wie auch ausgangsseitig zusätzlich noch durch die Wirkungsweise der Kondensatoren C7 und C8 herabgesetzt. Die Kontinuität dieser Ströme bedeutet also, daß sie trotz der ständig alternierenden Betätigung der Kontakte (entsprechend g1 und g2) nicht pulsieren.

Die dem Eingang des Gleichspannungswandlers abgewandten Anschlüsse der Eingangsinduktivitäten L3 und L5 und die dem Ausgang des Wandlers abgewandten Anschlüsse der Ausgangsinduktivitäten L4 und L6 sind also jeweils über einen dieser Speicherkondensatoren C5 und C6 miteinander verbunden. Unter anderem mit Hilfe des zweiten Speicherkondensators C6, d. h. zusätzlich zur Wirkungsweise des Speicherkondensators C5, wird eine gleichstrommäßige Potentialtrennung zwischen den Eingangsanschlüssen des Gleichspannungswandlers und seinen Ausgangsanschlüssen bewerkstelligt. Geht man zum Beispiel davon aus, daß der Eingangsanschluß e3 (oder e4) von der Gleichspannungsquelle her Erdpotential führt, so kann frei wählbar der eine oder auch der andere der beiden Ausgangsanschlüsse mit einer Erdpotential oder Massepotential führenden Anschlußklemme verbunden werden. In Abhängigkeit davon führt dann der jeweils andere Ausgangsanschluß des Gleichspannungswandlers nach Fig. 1 Pluspotential oder Minuspotential gegenüber Erdpotential bzw. Massepotential.

Die Beschreibung wendet sich nun der Schaltungsanordnung zu, wie sie tatsächlich in Fig. 2 dargestellt ist, nämlich mit den Transistoren T1 und T2 und den Dioden D2 und D1. Hierbei sollen aber zunächst die Diode D2 und der Transistor T2 außer Betracht bleiben. Ein Vergleich mit der Schaltungsanordnung nach Fig. 1 zeigt, daß in Fig. 2 in erfindungsgemäßer Weise außer der Eingangsinduktivität L3 und der Ausgangsinduktivität L4 eine Eingangsinduktivität L5 und eine Ausgangsinduktivität L6 vorgesehen sind. Diese beiden letzteren Induktivitäten sind zwischen den Eingangsanschluß e4 und den einen Anschluß des zweiten Speicherkondensators C6 und zwischen den zweiten Ausgangsanschluß a4 und denselben Anschluß des Speicherkondensators C6 geschaltet. Die Eingangsinduktivitäten L3 und L5 mögen gleiche elektrische Werte haben, ebenso auch die Ausgangsinduktivitäten L4 und L6. Folglich ergibt sich ein elektrisch völlig symmetrischer Aufbau.

Ferner ist der Schaltungsanordnung nach Fig. 2 zu entnehmen, daß die Induktivitäten L3 und L4 elektromagnetisch gekoppelt sind, desgleichen die Induktivitäten L5 und L6 untereinander. Die miteinander gekoppelten Induktivitäten sollen in bekannter Weise gleiche elektrische Werte haben. Davon ausgehend, daß die jeweils miteinander gekoppelten Induktivitäten durch Wicklungen realisiert sind, die unter Zugrundelegung gleichen Wickungssinns hergestellt sind, ist zu beachten, daß der Eingangsanschluß e3 mit dem Wicklungsanfang wa3 der Eingangsinduktivität L3 und der Wicklungsanfang wa4 der Ausgangsinduktivität L4 mit dem Ausgangsanschluß a3 verbunden ist. Umgekehrt verhält es sich bei den Wicklungsanfängen wa5 und wa6 der Induktivitäten L5 und L6, was ohne weiteres aus der Zeichnung zu entnehmen ist. Darüber hinaus besteht die in der Zeichnung nicht dargestellte Möglichkeit, alle vier Induktivitäten gemäß Fig. 2 elektromagnetisch miteinander zu koppeln. Dies bedeutet, daß ein einziges elektromagnetisches Bauteil verwendet werden kann, das vier verschiedene Wicklungen trägt, die die vier Induktivitäten gemäß Fig. 2 bilden.

Die Schaltungsanordnung nach Fig. 2 dient aufgrund ihres symmetrischen Aufbaues zur Speisung jeglicher Verbraucher, insbesondere solcher Verbraucher, bei denen eine einseitige potentialmäßige Bindung einer der beiden der Gleichstromspeisung dienenden Anschlußklemmen seitens des jeweiligen Verbrauchers vorgegeben ist. Ferner ist bei einer solchen Schaltungsanordnung eine beliebige Potentialzuordnung des einen oder des anderen der beiden Ausgangsanschlüsse uneingeschränkt möglich.

Bei der weiteren Beschreibung sei zunächst davon ausgegangen, daß in Fig. 2 als Schalter lediglich ein Transistor T1 und eine Diode D1 verwendet seien. Der Transistor T1 wird über seine Emitter-Basis-Strecke in bekannter Weise angesteuert (Ansteueranschlüsse t1 und t2), wozu ein Multivibrator verwendet werden kann. Der Transistor T1 wird dadurch abwechselnd stromdurchlässig und stromundurchlässig geschaltet. Seine Mitwirkungsweise entspricht derjenigen des zuvor beschriebenen Kontaktes, der dem Kontakt g1 in Fig. 1 entspricht.

Immer wenn der Transistor T1 stromdurchlässig ist, wird die Diode D1 in Sperrichtung beansprucht. Immer wenn der Transistor T1 stromundurchlässig ist, tritt an der Diode D1 eine Spannung auf, die sie in Durchlaßrichtung in Anspruch nimmt; die Diode D1 ist also stromdurchlässig. Die elektromagnetische Kopplung einer Eingangsinduktivität mit der jeweils ihr entsprechenden Ausgangsinduktivität bewirkt bekanntlich eine weitere Herabsetzung der Welligkeit sowohl des Eingangsstromes als auch des Ausgangsstromes.

Nunmehr sei auch auf die Diode D2 und den Transistor T2 eingegangen. Die in Fig. 2 dargestellte Schaltungsanordnung stellt einen Gleichspannungswandler für beide Übertragungsrichtungen dar. Wird der Transistor T1 alternierend durchgesteuert und gesperrt, so arbeitet der Gleichspannungswandler nach Fig. 2 in der Weise, daß er von einer an die Eingangsanschlüsse e3 und e4 angeschlossenen Gleichspannungsquelle gespeist wird und Gleichspannungsenergie an einen an die Ausgangsanschlüsse a3 und a4 angeschlossenen Verbraucher liefert. Ebenso kann aber auch an die Ausgangsanschlüsse a3 und a4 eine Gleichspannungsquelle angeschlossen sein, und mit den Eingangsanschlüssen e3 und e4 ein Verbraucher verbunden sein. In diesem Falle ist der Transistor T2 kontinuierlich alternierend durchzusteuern und zu sperren, wobei die Diode D2 immer dann stromführend ist, wenn der Transistor T2 gesperrt ist, und sperrend wirkt, wenn der Transistor T2 stromführend ist. Die Schaltungsanordnung nach Fig. 2 erlaubt also eine Spannungswandlung in beiden Richtungen. Die für den richtigen Anschluß der Gleichspannungsquelle jeweils zu beachtende Polung sowie die jeweilige Polarität der vom Gleichspannungswandler gelieferten Ausgangsspannung ergeben sich in sinnfälliger Weise aus der in Fig. 2 dargestellten Schaltungsanordnung.

Unter Bezugnahme auf die Schaltungsanordnung in Fig. 2 sei auch eine weitere Möglichkeit der Ausgestaltung der Erfindung hingewiesen. Mit zwei Gleichspannungswandlern nach Fig. 2, deren Eingänge parallel und deren Ausgänge gegeneinander in Serie geschaltet sind, läßt sich ein Vierquadranten-Betrieb realisieren. Es ist damit möglich, eine galvanisch getrennte Ausgangsspannung beliebig steuerbarer Polarität zu erzeugen, wobei für die beiden Gleichspannungswandler eine symmetrisch-alternative Ansteuerung vorgesehen werden kann.

Schließlich sei noch auf die Schaltungsanordnung nach Fig. 3 hingewiesen. Hierin sind zwei Eingangsinduktivitäten H1 und H2 vorgesehen. Diese entsprechen den Eingangsinduktivitäten L3 und L5 der Schaltungsanordnung nach Fig. 2. Der Transistor T3 in Fig. 3 entspricht dem Transistor T1 in Fig. 2. In Fig. 3 sind nun mehrere Paare a5 und a6, a7 und a8, a9 und a0 von Ausgangsanschlüssen für mehrere voneinander unabhängig zu speisende Verbraucher vorgesehen. Diese Verbraucher sind nicht nur gegenüber den an die Eingangsanschlüsse e5 und e6 angeschalteten Gleichspannungsquellen sondern auch untereinander gleichstrommäßig voneinander getrennt. Die Kondensatoren K1, K2 und K3 und die Ausgangsinduktivitäten H3 und H4 sind einander zugeordnet und sind den beiden Ausgangsanschlüssen a5 und a6 zugeordnet. Entsprechendes gilt für die Kondensatoren K4, K5 und K6 und die Ausgangsinduktivitäten H5 und H6 ; Entsprechendes gilt auch für die Kondensatoren K7, K8 und K9 und die Ausgangsinduktivitäten H7 und H8. Die Kondensatoren K4 und K5 in Fig. 3 sind mit den den Eingangsanschlüssen e5 und e6 abgewandten Wicklungsanschlüssen der Eingangsinduktivitäten H1 und H2 verbunden. Dagegen sind die Kondensatoren K1 und K2 mit Wicklungsanzapfungen der Eingangsinduktivitäten H1 und H2 verbunden. Dadurch lassen sich verschiedene Spannungs- und Stromübersetzungsverhältnisse erreichen. Über die Ausgangsanschlüsse a5 und a6, a7 und a8 bzw. a9 und a0 lassen sich den Verbrauchern also beliebig wählbare Speisespannungen zuführen. Dies kann also mit Hilfe von Wicklungsabgriffen an den Eingangsinduktivitäten H1 und H2 bewerkstelligt werden. Dabei können wiederum die Induktivitäten H1, H3, H5 und H7 miteinander elektromagnetisch gekoppelt werden, sowie auch die Induktivitäten H2, H4, H6 und H8 ; ebenso ist es auch möglich, sämtliche Induktivitäten miteinander elektromagnetisch zu koppeln. Damit verbunden ist die bereits erwähnte Möglichkeit, sämtliche Induktivitäten als ein einziges elektromagnetisches Bauteil zu realisieren.

Schließlich sei auch noch auf die weitere Möglichkeit hingewiesen, die schaltbare Verbindung zwischen den beiden der Gleichspannungsquelle zugewandten Anschlüssen der Speicherkondensatoren anstatt direkt über einen der beiden Schalter (in Fig. 2 über den Transistor T1 und in Fig. 3 über den Transistor T3) vielmehr über Wicklungsanzapfungen der Eingangsinduktivitäten L3 und L5, bzw. H1 und H2, verlaufen zu lassen. Dadurch läßt sich eine noch größere Vielfalt der Möglichkeiten von Spannungsübersetzungen (und Spannungsuntersetzungen) zwischen Eingangsanschlüssen und Ausgangsanschlüssen erreichen.

Die dargestellten Schaltungsanordnungen und die nur beschriebenen Abwandlungen und weiteren Ausgestaltungsmöglichkeiten stellen für alle darüber hinaus gehenden Schaltungsvarianten und Ergänzungen die Grundlage dar, soweit solche dem Fachmann zweckmäßig erscheinen.

**Patentansprüche**

1. Schaltungsanordnung für Fernmeldeanlagen, insbesondere für Fernsprechvermittlungsanlagen, mit Gleichspannungswandlern, welche jeweils eingangsseitig über eine Eingangsinduktivität (L3 ; H1) an einen Pol (e3 ; e5) einer Gleichspannungsquelle und ausgangsseitig über eine Ausgangsinduktivität (L4 ; H3, H5, H7) an die eine (a3 ; a5, a7, a9) von zwei Eingangsklemmen eines Verbrauchers angeschlossen sind und sowohl eingangsseitig als auch ausgangsseitig jeweils einen nicht pulsierenden Gleichstrom führen, und in welchen der dem Eingang des Wandlers (e3, e4 ; e5, e6) abgewandte Anschluß der Eingangsinduktivität (L3, H1) und der dem Ausgang (a3, a4 ; a5, a6, a7, a8, a9, a0) abgewandte Anschluß der Ausgangsinduktivität (L4 H3, H5, H7) über einen Speicherkondensator (C5 ; K1, K4, K7) miteinander verbunden sind, und in welchen mittels einer Schalteranordnung (T1, T2 ; T3) sowohl der Speicherkondensator (C5 ; K1, K4, K7) zwischen die Eingangsinduktivität (L3, H1) und den anderen Pol (e4, e6) der Gleichspannungsquelle schaltbar, als auch der dem Ausgang (a3, a4 ; a5, a6 ; a7, a8 ; a9, a0) abgewandte Anschluß der Ausgangsinduktivität (L4, H3, H5, H7) mit der anderen Eingangsklemme (a4 ; a6, a8, a0) des Verbrauchers verbindbar und kontinuierlich abwechselnd hiermit sowohl der Speicherkondensator (C5, K1, K4, K7) zwischen die Ausgangsinduktivität (L4, H3, H5, H7) und die andere Eingangsklemme (a4, a6, a8, a0) des Verbrauchers schaltbar als auch der dem Eingang des Wandlers (e3, e4 ; e5, e6) abgewandte Anschluß der Eingangsinduktivität (L3 ; H1) mit dem anderen Pol (e4, e6) der Gleichspannungsquelle verbindbar ist, dadurch gekennzeichnet, daß die schaltbare Verbindung des Speicherkondensators (C5) mit dem anderen Pol (e4) der Gleichspannungsquelle über einen zweiten Speicherkondensator (C6) verläuft, und daß über denselben (C6) auch die schaltbare Verbindung des — ersten — Speicherkondensators (C5) mit der zweiten Eingangsklemme (a4) des Verbrauchers verläuft, daß die Verbindung mit dem anderen Pol der Gleichspannungsquelle (e4) über eine zweite Eingangsinduktivität (L5) und die Verbindung mit der zweiten Eingangsklemme (a4) des Verbrauchers über eine zweite Ausgangsinduktivität (L6) verlaufen, daß beide Eingangsinduktivitäten (L3, L5) und beide Ausgangsinduktivitäten (L4, L6) miteinander induktiv gekoppelt sind und als ein einziges elektromagnetisches Bauteil ausgeführt sind, wobei der Wicklungsanfang — oder das Wicklungsende — der ersten Eingangsinduktivität (L3) mit dem einen Pol (e3) der Gleichspannungsquelle und der Wicklungsanfang — oder das Wicklungsende — der ersten Ausgangsinduktivität (L4) mit der ersten Eingangsklemme (a3) des Verbrauchers und das Wicklungsende — oder der Wicklungsanfang — der zweiten Eingangsinduktivität (L5) mit dem anderen Pol (e4) der Gleichspannungsquelle und das Wicklungsende — oder der Wicklungsanfang — der zweiten Ausgangsinduktivität (L6) mit der zweiten Eingangsklemme (a4) des Verbrauchers verbunden ist.

2. Schaltungsanordnung nach Anspruch 1, dadurch gekennzeichnet, daß die der Gleichspannungsquelle (e3/e4) zugewandten Anschlüsse der beiden Speicherkondensatoren (C5, C6) einerseits und die dem Verbraucher (a3/a4) zugewandten Anschlüsse der beiden Speicherkondensatoren (C5, C6) andererseits jeweils über einen von zwei alternierend betätigten Schaltern (T1, T2), insbesondere Transistoren, miteinander verbindbar sind.

3. Schaltungsanordnung nach Anspruch 1, dadurch gekennzeichnet, daß die der Gleichspannungsquelle (e3/e4) zugewandten Anschlüsse der beiden Speicherkondensatoren (C5, C6) über einen ersten Schalter (T1), insbesondere Transistor, miteinander verbindbar sind, und daß die dem Verbraucher (a3/a4) zugewandten Anschlüsse der beiden Speicherkondensatoren (C5, C6) miteinander über einen ersten stromrichtungsabhängigen Widerstand (D1) verbunden sind.

4. Schaltungsanordnung nach Anspruch 1, dadurch gekennzeichnet, daß der erste Speicherkondensator (K1) mit einer Wicklungsanzapfung der ersten Eingangsinduktivität (H1) und der zweite Speicherkondensator (K2) mit einer Wicklungszapfung der zweiten Eingangsinduktivität (H2) verbunden ist.

5. Schaltungsanordnung nach Anspruch 3, dadurch gekennzeichnet, daß dem ersten Schalter (T1) ein zweiter stromrichtungsabhängiger Widerstand (D2) und dem ersten stromrichtungsabhängigen Widerstand (D1) ein zweiter Schalter (T2) parallelgeschaltet ist.

6. Schaltungsdanordnung nach Anspruch 5, dadurch gekennzeichnet, daß bei Ausbildung der Schalter als Transistoren (T1, T2) jeweils der stromrichtungsabhängige Widerstand (D2, D1) mit dem Transistor (T1, T2) hinsichtlich der Stromdurchlaßrichtungen antiparallel zusammengeschaltet ist.

7. Schaltungsanordnung nach Anspruch 3, dadurch gekennzeichnet, daß bei Ausbildung des ersten Schalters als Transistor (T1, T3) dieser hinsichtlich seiner Stromdurchlaßrichtung mit dem Minuspol — bzw. Pluspol — an die Eingangsinduktivität (L3, H1 bzw. L5, H2) und der erste stromrichtungsabhängige Widerstand (D1, D3, D4, D5) mit seinem Minuspol — bzw. Pluspol — an die Ausgangsinduktivität (L4, H3, H5, H7 bzw. L6, H4, H6, H8) angeschlossen ist.

8. Schaltungsanordnung nach Anspruch 1, dadurch gekennzeichnet, daß mit der ersten Eingangsinduktivität (H1) unabhängig voneinander über mehrere erste Speicherkondensatoren (K1, K4, K7) mehrere erste Ausgangsinduktivitäten (H3, H5, H7) und mit diesen einzeln die ersten Anschlußklemmen (a5, a7, a9) mehrerer Verbraucher verbunden sind, und daß mit der zweiten Eingangsinduktivität (H2) unabhängig voneinander über mehrere zweite Speicherkondensatoren (K2, K5, K8) mehrere zweite Ausgangsinduktivitäten (H4, H6, H8) und mit diesen einzeln die zweiten Anschlußklemmen (a6, a8, a0) mehrerer Verbraucher verbunden sind.

9. Schaltungsanordnung nach Anspruch 8, dadurch gekennzeichnet, daß die mehrerer ersten — und gegebenenfalls auch zweiten — Speicherkondensatoren (K1, K4, K7 ; K2, K5, K8) teils mit der Endanschlußklemme — bzw. den Endanschlußklemmen — der ersten Eingangsinduktivität (H1) bzw. der ersten und der zweiten Eingangsinduktivität (H1, H2) — und teils mit deren Wicklungsanzapfungen verbunden ist — bzw. sind.

10. Schaltungsanordnung nach Anspruch 4, dadurch gekennzeichnet, daß die schaltbare Verbindung zwischen den beiden der Gleichspannungsquelle (e5, e6) zugewandten Anschlüssen der Speicherkondensatoren (K1, K2) über eine Wicklungsanzapfung der Eingangsinduktivität (H1) bzw. über Wicklungsanzapfungen der Eingangsinduktivitäten (H1, H2) verlaufen.

## Claims

1. A circuit arrangement for telecommunications systems, in particular for telephone exchange systems, with d. c. voltage converters each connected at their input end *via* an input inductance (L3 : H1) to one pole (e3 ; e5) of a d. c. voltage source and connected at their output end via an output inductance (L4 ; H3, H5, H7) to one (a3 ; a5 ; a7 ; a9) of two input terminals of a load and both at their input end and their output end each conduct a non-pulsing direct current, and in which that terminal of the input inductance (L3, H1) remote from the input of the transformer (e3, e4 ; e5, e6) and that terminal of the output inductance (L4, H3, H5, H7) remote from the output (a3, a4 ; a5, a6, a7, a8, a9, a0) are connected to one another via a storage capacitor (C5 ; K1, K4, K7), and in which, by means of a switch arrangement (T1, T2 ; T3) the storage capacitor (C5 ; K1, K4, K7) can be switched between the input inductance (L3, H1) and the other pole (e4, e6) of the d. c. voltage source, and likewise that therminal of the output inductance (L4, H3, H5, H7) remote from the output (a3, a4 ; a5, a6, a7, a8, a9, a0) can be connected to the other input terminal (a4 ; a6, a8, a0) of the load and, in continuous alternation therewith, the storage capacitor (C5, K1, K4, K7) can be switched between the output inductance (L4, H3, H5, H7) and the other input terminal (a4, a6, a8, a0) of the load and likewise that terminal of the input inductance (L3 ; H1) remote from the input of the transformer (e3, e4 ; e5, e6) can be connected to the other pole (e4, e6) of the d. c. voltage source, characterised in that the switch-controlled connection of the switch capacitor (C5) to the other pole (e4) of the d. c. voltage source extends across a second storage capacitor (C6) and that the switch-controlled connection of the — first — storage capacitor (C5) to the second input terminal (a4) of the load likewise extends across the second storage capacitor (C6), that the connection to the other pole of the d. c. voltage source (e4) extends across a second input inductance (L5) and the connection to the second input terminal (a4) of the load extends across a second output inductance (L6), that the two input inductances (L3, L5) and the two output inductances (L4, L6) are inductively coupled to one another and consist of one single electromagnetic component, where the winding start — or the winding end — of the first input inductance (L3) is connected to the first pole (e3) of the d. c. voltage source and the winding start — or the winding end — of the first output inductance (L4) is connected to the first input terminal (a3) of the load, and the winding end — or the winding start — of the second input inductance (L5) is connected to the other pole (e4) of the d. c. voltage source and the winding end — or the winding start — of the second output inductance (L6) is connected to the second input terminal (a4) of the load.

2. A circuit arrangement as claimed in Claim 1, characterised in that on the one hand those terminals of the two storage capacitors (C5, C6) adjacent the d. c. voltage source (e3/e4) and on the other hand those terminals of the two storage capacitors (C5, C6) adjacent the load (a3/a4) can be connected to one another *via* one of two alternately-actuated switches (T1, T2), in particular transistors.

3. A circuit arrangement as claimed in Claim 1, characterised in that those terminals of the two storage capacitors (C5, C6) adjacent the d. c. voltage source (e3/e4) can be connected to one another *via* a first switch (T1), in particular a transistor, and that those terminals of the two storage capacitors (C5, C6) adjacent the loads (a3/a4) are connected to one another via a first impedance (D1) dependent upon the current direction.

4. A circuit arrangement as claimed in Claim 1, characterised in that the first storage capacitor (K1) is connected to a winding tapping of the first input inductance (H1) and the second storage capacitor (K2) is connected to a winding tapping of the second input inductance (H2).

5. A circuit arrangement as claimed in Claim 3, characterised in that the first switch (T1) is connected in parallel with a second impedance (D2), which is dependent upon the current direction, and the first impedance (D1), which is dependent upon current direction, is connected in parallel with a second switch (T2).

6. A circuit arrangement as claimed in Claim 5, characterised in that when the switches consist of transistors (T1, T2), the impedance (D2, D1), which is dependent upon current direction, is connected in anti-parallel fashion to the transistor (T1, T2) in respect of the current-conducting directions.

7. A circuit arrangement as claimed in Claim 3, characterised in that when the first switch represents a transistor (T1, T3), this is connected in respect of its current-conducting direction by its negative pole or its positive pole the input inductance (L3, H1 and L5, H2) whereas the impedance (D1, D3, D4, D5), which is dependent upon current direction, is connected by its negative pole or its positive pole to the output inductance (L4, H3, H5, H7 and L6, H4, H6, H8).

8. A circuit arrangement as claimed in Claim 1, characterised in that a plurality of first output inductances (H3, H5, H7) are independently connected via a plurality of first storage capacitors (K1, K4, K7) to the first input inductance (H1), and that the first connection terminals (a5, a7, a9) of a plurality of loads are individually connected to said first output inductances, and that a plurality of second output inductances (H4, H6, H8) are connected independently *via* a plurality of second storage capacitors (K2, K5, K8) to the second input inductance (H2) and that the second connection terminal (a6, a8, a0) of a plurality of loads are individually connected to said second output inductances.

9. A circuit arrangement as claimed in Claim 8, characterised in that the plurality of first — and possibly also second — storage capacitors (K1, K4, K7 ; K2, K5, K8) is — or are — connected part to the end connection terminal — or end connection terminals — of the first input inductance (H1) or of the first and second input inductances (H1, H2) — and in part to the winding tappings thereof.

10. A circuit arrangement as claimed in Claim 4, characterised in that the switch-controlled connection between the two terminals of the storage capacitors (K1, K2) adjacent the d. c. voltage source (e5, e6) extend across a winding tapping of the input inductance (H1) or winding tappings of the input inductances (H1, H2).

**Revendications**

1. Montage pour des installations de télécommunications, notamment pour des installations de téléphonie, comportant des convertisseurs continu-continu, dont le côté entrée est raccordé respectivement par l'intermédiaire d'une inductance d'entrée (L3 ; H1) à un pôle (e3 ; e5) d'une source de tension continue et dont le côté sortie est raccordé par l'intermédiaire d'une inductance de sortie (L4 ; H3, H5, H7) à l'une (a3 ; a5, a7, a9) de deux bornes d'entrée d'un appareil d'utilisation et qui véhiculent respectivement un courant continu non pulsatoire aussi bien du côté entrée que du côté sortie et dans lesquels la borne, située à l'opposé de l'entrée du convertisseur (e3 ; e5, e6), de l'inductance d'entrée (L3 ; H1) et la borne, située à l'opposé de la sortie (a3, a4 ; a5, a6, a7, a8, a9, a0), de l'inductance de sortie (L4 ; H3, H5, H7) sont reliées entre elles par l'intermédiaire d'un condensateur de stockage (C5 ; K1, K4, K7) et dans lesquelles, au moyen d'un dispositif à commutateurs (T1, T2 ; T3), aussi bien le condensateur de stockage (C5 ; K1, K4, K7) peut être branché entre l'inductance d'entrée (L3 ; H5) et l'autre pôle (e4 ; e6) de la borne de tension continue, et la borne, située à l'opposé de la sortie (a3, a4 ; a5, a6 ; a7 ; a8 ; a9, a0), de l'inductance de sortie (L4 ; H3, H5, H7) peut être reliée à l'autre borne d'entrée (a4 ; a6, a8, a0) de l'appareil d'utilisation et, en permanence selon un mode alterné avec ces opérations, aussi bien le condensateur de stockage (C5 ; K1, K4, K7) peut être branché entre l'inductance de sortie (L4 ; H3, H5, H7) et l'autre borne d'entrée (a4 ; a6, a8, a0) de l'appareil d'utilisation et également la borne, située à l'opposé de l'entrée du convertisseur (e3, e4 ; e5, e6), de l'inductance d'entrée (L3 ; H1) peut être reliée à l'autre pôle (e4, e6) de la source de tension continue, caractérisé par le fait que la liaison commutable du condensateur de stockage (C5) avec l'autre pôle (e4) de la source de tension continue s'effectue par l'intermédiaire d'un second condensateur de stockage (C6), et que, également, la liaison commutable du — premier — condensateur de stockage (C5) avec la seconde borne d'entrée (a4) de l'appareil d'utilisation est réalisée par l'intermédiaire de ce même condensateur (C6), que la liaison avec l'autre pôle de la source de tension continue (e4) est réalisée par l'intermédiaire d'une seconde inductance d'entrée (L5) et que la liaison avec la seconde borne d'entrée (a4) de l'appareil d'utilisation est réalisée par l'intermédiaire d'une seconde inductance de sortie (L6), que les deux inductances d'entrée (L3, L5) et les deux inductances de sortie (L4, L6) sont accouplées inductivement entre elles et sont réalisées sous la forme d'un composant électromagnétique unique, auquel cas le début de l'enroulement — ou la fin de l'enroulement — de la première inductance d'entrée (L3) est raccordé à un pôle (e3) de la source de tension continue, et le début de l'enroulement — ou la fin de l'enroulement — de la première inductance de sortie (L4) est raccordé à la première borne d'entrée (a3) de l'appareil d'utilisation et la fin de l'enroulement — ou le début de l'enroulement — de la seconde inductance d'entrée (L5) est raccordée à l'autre pôle (e4) de la source de tension continue et la fin de l'enroulement — ou le début de l'enroulement — de la seconde inductance de sortie (L6) est reliée à la seconde borne d'entrée (a4) de l'appareil d'utilisation.

2. Montage suivant la revendication 1, caractérisé par le fait que les bornes, situées du côté de la source de tension continue (e3/e4), des deux condensateurs de stockage (C5, C6) d'une part et les bornes, qui sont situées du côté de l'appareil d'utilisation (a3/a4), des deux condensateurs de stockage (C5, C6) d'autre part peuvent être reliés respectivement entre deux par l'intermédiaire de l'un de deux commutateurs (T1, T2), notamment des transistors, actionnés en alternance.

3. Montage suivant la revendication 1, caractérisé par le fait que les bornes, situées du côté de la source de tension continue (e3/e4), des deux condensateurs de stockage (C5, C6) peuvent être reliés entre elles par l'intermédiaire d'un premier commutateur (T1), notamment un transistor, et que les bornes, tournées vers l'appareil d'utilisation (a3/a4), des deux condensateurs de stockage (C5, C6) peuvent être reliés entre elles par l'intermédiaire d'une première résistance (D1) qui dépend du sens du courant.

4. Montage suivant la revendication 1, caractérisé par le fait que le premier condensateur de stockage (K1) est relié à une prise de l'enroulement de la première inductance d'entrée (H1) et que le second condensateur de stockage (K2) est relié à une prise de l'enroulement de la seconde inductance d'entrée (H2).

5. Montage suivant la revendication 3, caractérisé par le fait qu'une seconde résistance (D2), qui dépend du sens du courant, est branchée en parallèle avec le premier commutateur (T1) et qu'un second commutateur (T2) est branché en parallèle avec la première résistance (D1), qui dépend du sens du courant.

6. Montage suivant la revendication 5, caractérisé par le fait que, dans le cas de la réalisation du commutateur sous la forme de transistors (T1, T2), la résistance respective (D2, D1), qui dépend du sens du courant, est branchée, selon un montage antiparallèle du point de vue des sens passants du courant, avec le transistor (T1, T2).

7. Montage suivant la revendication 3, caractérisé par le fait que dans le cas de la réalisation du premier commutateur sous la forme d'un transistor (T1, T3), ce dernier est raccordé, du point de vue de son sens passant pour le courant, par le pôle moins — ou le pôle plus — à l'inductance d'entrée (L3, H1 ou L5, H2), et la première résistance (D1, D3, D4, D5), qui dépend du sens du courant, est raccordée par son pôle moins — ou par son pôle plus — à l'inductance de sortie (L4, H3, H5, H7 ou L6, H4, H6, H8).

8. Montage suivant la revendication 1, caractérisé par le fait qu'à la première inductance d'entrée (H1) se trouvent raccordées, indépendamment les unes des autres et par l'intermédiaire de plusieurs premiers condensateurs de stockage (K1, K4, K5), plusieurs premières inductances de sortie (H3, H5, H7) et qu'à ces dernières se trouvent raccordées individuellement les premières bornes de raccordement (a5, a7, a9) de plusieurs appareils d'utilisation, et qu'à la seconde inductance d'entrée (H2) se trouvent raccordées, indépendamment les unes des autres et par l'intermédiaire de plusieurs condensateurs de stockage (K2, K5, K8), plusieurs secondes inductances de sortie (H4, H6, H8) et qu'à ces dernières se trouvent raccordées individuellement les secondes bornes de raccordement (a6, a8, a0) de plusieurs appareils d'utilisation.

9. Montage suivant la revendication 8, caractérisé par le fait que la pluralité des premiers — et éventuellement également des seconds — condensateurs de stockage (K1, K4, K7 ; K2, K5, K8) sont reliés en partie à la borne de raccordement d'extrémité — ou aux bornes de raccordement d'extrémité — de la première inductance d'entrée (H1) de la première et de la seconde inductances d'entrée (H1, H2) — et en partie aux prises de leurs enroulements.

10. Montage suivant la revendication 4, caractérisé par le fait que la liaison commutable entre les deux bornes, situées du côté de la source de tension continue (e5, e6), des condensateurs de stockage (K1, K2) est établie par l'intermédiaire d'une prise de l'enroulement de l'inductance d'entrée (H1) ou par l'intermédiaire de prises des enroulements des inductances d'entrée (H1, H2).

## FIG 1

## FIG 2

## FIG 3